# EUROPÄISCHE PATENTSCHRIFT

(11) **EP 1 738 294 B1**
(45) Veröffentlichungstag und Bekanntmachung des Hinweises auf die Patenterteilung: **25.01.2012**
(21) Anmeldenummer: 05716339.6
(22) Anmeldetag: 23.03.2005
(51) Int. Cl.: G06K 7/00, H04B 1/38

(54) **SMART CARD CONNECTOR INSBESONDERE MIT SCHIRMEINRICHTUNG**
SMART CARD CONNECTOR, ESPECIALLY COMPRISING A SHIELDING DEVICE
CONNECTEUR DE CARTE PUCE, DOT NOTAMMENT D'UN DISPOSITIF DE PROTECTION

(30) Priorität: 29.03.2004 DE 102004015279
(43) Veröffentlichungstag der Anmeldung: 03.01.2007
(73) Patentinhaber: Amphenol-Tuchel Electronics GmbH, 74080 Heilbronn (DE)
(72) Erfinder: SCHNELL, Thomas, 74078 Heilbronn (DE); LOMBARDI, Fabio, 74223 Flein (DE)
(74) Vertreter: Wagner, Karl H.
(86) Internationale Anmeldenummer: PCT/EP2005/003120
(87) Internationale Veröffentlichungsnummer: WO 2005/093636

(56) Entgegenhaltungen:
- WO-A-01/01324
- DE-A1- 10 052 025
- DE-A1- 10 238 156
- FR-A- 2 845 801
- US-A- 5 933 328

## Beschreibung

Die Erfindung bezieht sich auf einen Smart Card Connector insbesondere für zwei Smart Karten und zwar insbesondere eine SIM-Karte und eine MMC-Karte. Der erfindungsgemäße Smart Card Connector für zwei Smart Karten ist vorzugsweise mit einer Schirmeinrichtung ausgestattet.

Aus der DE 19521721 A1 ist bereits eine Kontaktiereinrichtung für eine Chip Karte, insbesondere eine SIM-Karte bekannt, bei der ein Kontaktträger, ein Metalldeckel, Lesekontaktelemente sowie ebenfalls im Kontaktträger angeordnete Massekontaktelemente verwendet werden, um den Metalldeckel mit Erde zu verbinden. Durch den geschlossenen Metalldeckel der Klappschiebebauart erfolgt eine Schirmung, wobei die Schirmkontaktierung innerhalb, ggf. aber auch außerhalb, der Kartenkontur erfolgt.

Die DE 10060650 A1 beschreibt einen Smart Card Connector für zwei Smart Karten, insbesondere SIM-Karten und zwar mit einem Kontaktträger sowie einem am Kontaktträger angelenkten zweiten Kontaktträger, der in der Form eines Deckels ausgebildet ist und Kontaktelemente trägt, wobei weitere Mittel vorgesehen sind, die den Anschluss mit der Leiterplatte sicherstellen.

Die US 6,623,305 B2 veranschaulicht einen Dual SIM Card Connector, bei dem in einem Kontaktträger zwei Sätze von Kontaktelementen angeordnet sind, die zur Kontaktgabe mit Smart Karten dienen, wobei die eine Smart Karte oberhalb des Kontaktträgers und die andere Smart Karte unterhalb des Kontaktträgers durch Einschieben in den Smart Card Connector anschließbar ist.

Ferner zeigt die US 5,933,328 einen Smart-Card-Connector für zwei Smart-Cards und zwar befindet sich in einem Klappdeckel eine MMC-Karte während im Kontaktträger eine SIM-Karte angeordnet ist. Diese Druckschrift zeigt auch ferner eine Konstruktion bei der beide Karten im schwenkbaren Deckel angeordnet sind. Die Ansprüche sind gegen dieses Dokument abgegrenzt.

Aus der WO 01/01324 A1 ist eine Kontaktiervorrichtung bekannt, die einen Grundkörper mit daran abgelenktem Deckel besitzt, wobei zwischen dem Deckel und dem Grundkörper ein Zwischenraum zur Aufnahme einer Sim-Karte vorhanden ist und wobei ferner im Deckel eine Steckverbindung für eine weitere Sim-Karte eingebaut ist.

Die DE 102 38 156 A1 zeigt eine Kontaktiervorrichtung für eine Chip-Karte und zwar insbesondere für eine Sim-Karte mit einem aus elektrisch leitendem Material hergestellten Deckel. Diese Kontaktiervorrichtung ist nur zur Kontaktierung von einer Sim-Karte ausgelegt.

Gemäß der Erfindung ist ein Smart-Card-Connector mit den im Anspruch 1 genannten Merkmalen vorgesehen. Bevorzugte Ausgestaltungen der Erfindung ergeben sich aus den Unteransprüchen.

Die vorliegende Erfindung sieht also einen Smart Card Connector für zwei Smart Karten vor, wobei eine Abschirmung insgesamt als auch eine Abschirmung der beiden Karten untereinander bzw. gegeneinander erreicht werden soll. Der Aufbau des Smart Card Connectors soll dabei kostengünstig zu realisieren sein, und eine große Betriebssicherheit auch bei mehrmaliger Betätigung bieten.

Der erfindungsgemäße Smart Card Connector für zwei Smart Karten, d.h. eine erste Karte, insbesondere eine SIM-Karte und eine zweite Karte, insbesondere eine MMC-Karte, weist vorzugsweise einen einzigen, eine Ober- und eine Unterseite aufweisenden Kontaktträger auf. In dem Kontaktträger sind ein erster Satz von Kontaktelementen für die Kontaktierung der Kontaktzonen einer ersten Karte und ein zweiter Satz von Kontaktelementen für die Kontaktierung der Kontaktzonen einer zweiten Karte vorgesehen. Die Kontaktelemente der ersten und zweiten Zonen besitzen jeweils Anschlussenden und Kontaktenden bzw. Kontaktstellen. Die Anschlussenden der Kontaktelemente der beiden Kontaktsätze befinden sich in einer Ebene an der Unterseite des Kontaktträgers. Die Kontaktenden befinden sich an der Oberseite des Kontaktträgers. Die Kontaktenden bzw. Kontaktpunkte der Kontaktelemente der ersten und zweiten Sätze liegen auf unterschiedlichen Ebenen. Ein Schirmblech ist am Kontaktträger, die Oberseite des Kontaktträgers überspannend, angebracht und bildet einen Aufnahmebereich bzw. einen Aufnahmeraum für die erste Karte. Ein vorzugsweise am Schirmblech angebrachter, vorzugsweise schwenkbar angebrachter Metalldeckel bildet einen zweiten Aufnahmebereich für die zweite Karte. Der Deckel ist aus einer Öffnungsstellung in der die zweite Karte eingesetzt werden kann, in eine Schließstellung benachbart zur Oberseite des Abschirmblechs derart verschwenkbar, dass in der Schließstellung, die gleichzeitig auch verriegelbar ist, die Kontaktzonen der zweiten Karte die Kontaktenden der zugehörigen Kontaktelemente kontaktieren können.

Bevorzugte Ausführungsbeispiele der Erfindung ergeben sich aus den Patentansprüchen.

Ein Ausführungsbeispiel eines Smart Card Connectors mit einer Schirmeinrichtung für eine SIM- und eine MMC-Karte sei unter Bezugnahme auf die Zeichnung beschrieben; in der Zeichnung zeigt:
- Fig. 1: eine perspektivische Draufsicht auf den erfindungsgemäßen Smart Card Connector in seiner Öffnungsstellung, wobei weder die SIM-noch die MMC-Karte dargestellt ist;
- Fig. 2: den Smart Card Connector gemäß Fig. 1 mit zu seiner Schließstellung hin verschwenktem Deckel;
- Fig. 3: eine perspektivische Draufsicht auf den Smart Card Connector in seiner Schließstellung, wobei die SIM-Karte und auch die MMC-Karte dargestellt sind;
- Fig. 4: eine perspektivische, teilweise geschnittene schematische Seitenansicht des Smart Card Connectors in seiner Schließstellung, aber ohne die beiden Karten;
- Fig. 5: eine perspektivische Draufsicht auf einen, einen Teil des Smart Card Connectors gemäß Fig. 1 bildenden Kontaktträger;
- Fig. 6: einen schematischen Schnitt Längs Linie 4-4 in Fig. 5; und
- Fig. 7: eine Ansicht eines, einen Teil des Smart Card Connectors gemäß Fig. 1 bildenden Schirmblechs.

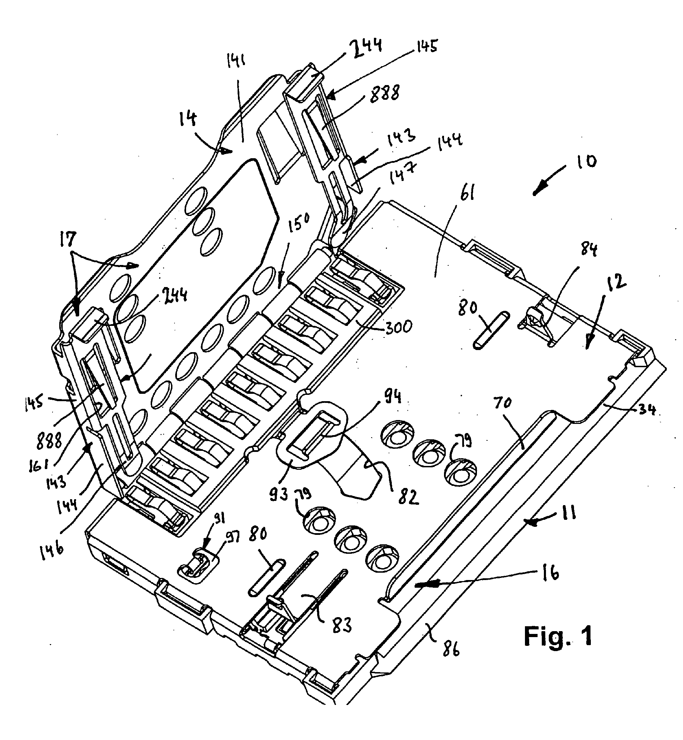

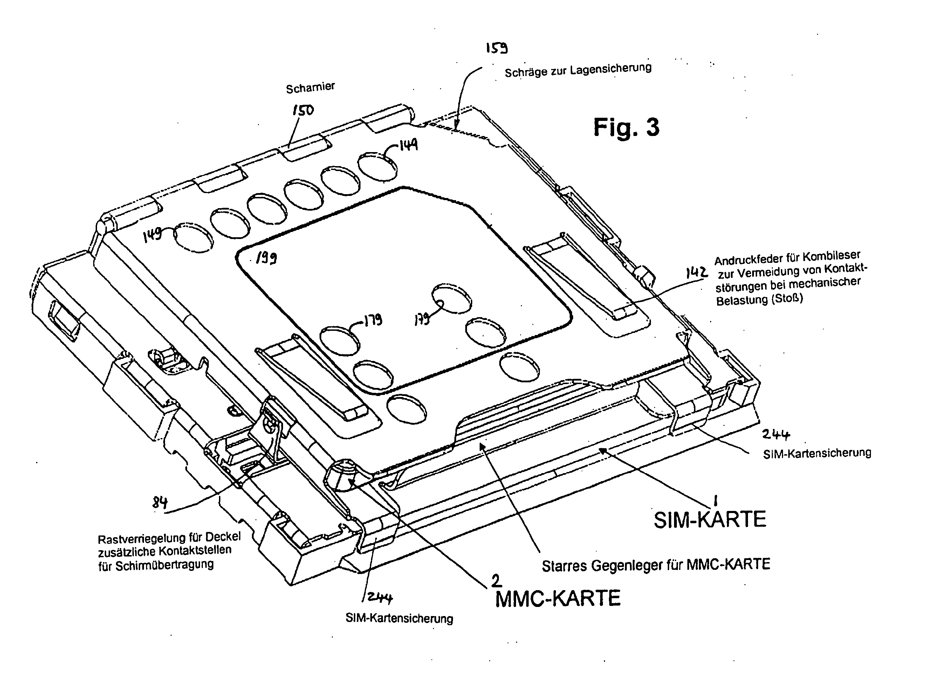

Fig. 1 zeigt ein Ausführungsbeispiel eines Smart Card Connectors 10 für zwei Smart Karten, und zwar für eine SIM-Karte 1 und eine MMC-Karte 2, die in Fig. 3, aber nicht in Fig. 1, zu sehen sind. Im Folgenden wird einfach nur das Wort Karte für eine Smart Card verwendet, und die SIM-Karte wird auch allgemein als eine erste Karte 1 und die MMC-Karte 2 wird auch allgemein als eine zweite Karte 2 bezeichnet. Der Smart Card Connector 10 ist mit einer Schirmeinrichtung ausgestattet, die eine Abschirmung insgesamt und auch für die beiden Karten 1, 2 untereinander bzw. gegeneinander vorsieht.

Der Smart Card Connector 10 weist einen Kontaktträger oder Kontaktkörper 11, ein daran angebrachtes Abschirmelement bzw. Schirmblech 12 und einen vorzugsweise am Schirmblech 12 schwenkbar befestigten Metalldeckel 14 auf. Im Folgenden wird auf den abschirmenden Metalldeckel 14 kurz als Deckel 14 Bezug genommen.

Zwischen dem Kontaktträger 11 und dem Schirmblech 12 ist ein erster Aufnahmebereich 16 für die erste Karte 1 definiert. Der Deckel 14 bildet einen zweiten Aufnahmebereich 17 für die zweite Karte 2.

### Der Kontaktträger 11

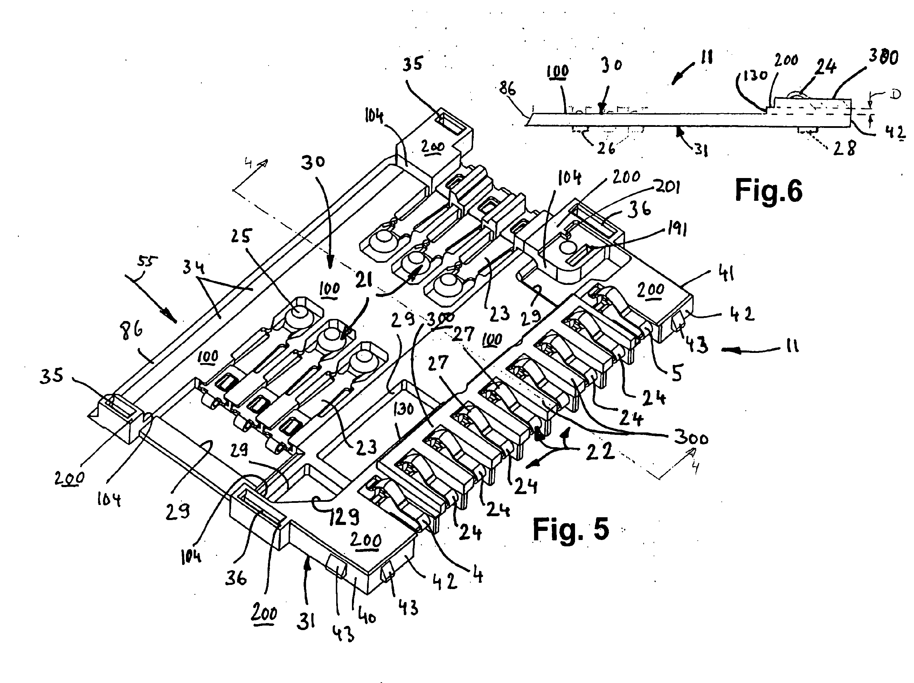

Der insbesondere in den Figuren 5 und 6 dargestellte Kontaktträger 11 bildet eine Oberseite 30 und eine Unterseite 31. Fig. 5 ist im Wesentlichen eine Draufsicht auf die Oberseite 30, die unterschiedliche ebene Flächen bildet, welche auf unterschiedlichen Niveaus oder Höhen liegen.

Ein erster Satz 21 von Kontaktelementen 23 ist im Kontaktträger 11 verrastet, d.h. in vom Kontaktträger 11 gebildete Hohlräume eingesetzt. Jedes Kontaktelement 23 ist im Ganzen U-förmig gebogen, wobei am Ende des längeren Schenkels des U ein Kontaktende 25 gebildet wird. Am entgegengesetzt liegenden Ende, dem kurzen Schenkel des U's ist ein Anschlussende 26 vorgesehen, welches gestrichelt in der Schnittdarstellung der Fig. 6 angedeutet ist. Ein zweiter Satz 22 von Kontaktelementen 24 ist am Kontaktträger 11 vorzugsweise durch Verrasten und zwar quer zum Verlauf der Kontaktelements 23 des ersten Satzes 21 angebracht. Der zweite Satz 22 von Kontaktelementen 24 erstreckt sich entlang der einen Längsseitenfläche 42 des im Ganzen rechteckigen Kontaktträgers 11. Jedes der Kontaktelemente 24 besitzt ein Kontaktende 27 und ein - vgl. Fig. 6 - Anschlussende 28. Sowohl die ersten Kontaktelemente 23 als auch die zweiten Kontaktelemente 24 sind in die in Fig. 5 gezeigten Positionen vorgespannt.

Der Kontaktträger 11 bildet mehrere Durchtrittsöffnungen 29, in deren Bereich auf der Schaltungsplatte auf der der Kontaktträger angeordnet wird, Bauelemente vorgesehen sein können.

Für die Anbringung des Schirmblechs 12 an der Oberseite 30 des Kontaktträgers sieht dieser beidseitig benachbart zu einem Einführschlitz 34 für die erste Karte 1 jeweils eine Schirmblechaufnahme 35 vor. In Einschubrichtung 55 der Karte 1 nach hinten versetzt, bildet der vorzugsweise aus Kunststoff gespritzte Kontaktträger 11 zwei weitere an entgegengesetzten Querseitenflächen 40, 41 angeordnete Schirmblechaufnahmen 36. Ferner bildet der rahmenartige Kontaktträger 11 an seinen Querseitenflächen 40 und 41 sowie an seiner Längsseitenfläche 42 Rasthaken 43. Wie bereits oben erwähnt, wird die Oberseite 30 durch unterschiedliche ebene Flächen gebildet. Eine dieser ebenen Flächen dient als eine Auflage und Gleitfläche für die erste Karte 1; diese Auflagefläche für die erste Karte, die kurz als erste Auflagefläche bezeichnet wird, ist mit 100 gekennzeichnet. In Querrichtung, d.h. in der Einschubrichtung 55 werden nach oben gegenüber der Auflagefläche 100 verlaufend beidseitig im Bereich der Schirmblechaufnahmen 35, 36 Führungsflächen 104 vom Kontaktträger 11 gebildete. Querverlaufend zu den Führungsflächen 104 bildet der Kontaktträger 11 eine Anlageschräge 129 für die erste Karte 1 sowie senkrecht zu den beidseitig angeordneten Führungsflächen 104 verlaufend, eine Anlagefläche 130. Diese begrenzt die Einsetztiefe der durch den Einführschlitz 34 eingeführten ersten Karte 1.

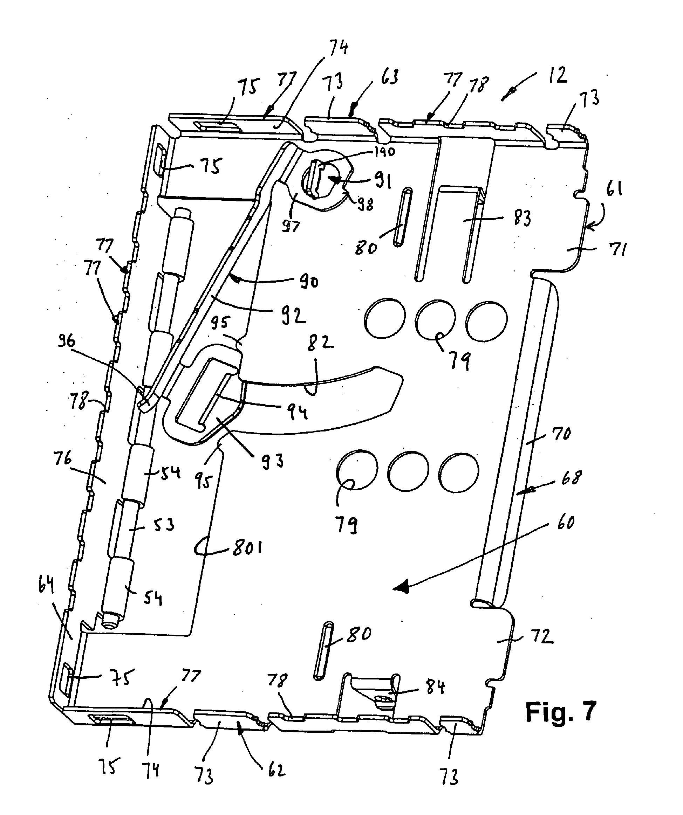

Der Kontaktträger 11 bildet ferner auf einem um den Betrag D - vgl. Fig. 6 - zweiten und höheren Niveau eine Fläche 200, dicht benachbart zu welcher Teile einer Unterseite 60 (Fig. 7) des Schirmblechs 12 im zusammengebauten Zustand (Fig. 1) des Smart Card Connectors 10 zu liegen kommen.

Schließlich bildet der Kontaktträger 11 auf einem dritten Niveau, welches oberhalb des zweiten Niveaus liegt, eine dritte Auflagefläche 300, die als Auflage für die Kontaktzone der zweiten Karte 2 vorgesehen ist.

Man erkennt, dass die Größenordnung der Höhendifferenz zwischen dem zweiten Niveau und dem ersten Niveau im Bereich der Dicke der ersten Karte 1 liegt. Die Größe der Höhendifferenz zwischen dem dritten und zweiten Niveau liegt in etwa in der Größenordnung der Dicke des Schirmblechs 12.

Im nicht kontaktierten Zustand liegen die Kontaktenden 25 der ersten, vorzugsweise vorgespannten Kontaktelemente 23 etwas oberhalb der Auflagefläche 100 für die erste Karte 1 und werden dann beim Einführen der ersten Karte 1 nach unten gedrückt. Ähnlich liegen die Kontaktenden 27 der zweiten Kontaktelemente 24 etwas oberhalb der Auflagefläche 300 für die zweite Karte 2, und zwar sind sie in diese Position vorgespannt, um dann beim Erreichen der Schließstellung des Deckels durch die zweite Karte 2 niedergedrückt zu werden, um eine gute Kontaktierung mit den Kontaktzonen der zweiten Karte 2 vorzusehen.

Wie in den Figuren 1 bis 3 gezeigt, ist auf dem Kontaktträger 11 das Schirmblech 12 angeordnet und bildet den Aufnahmebereich 16, der auch als Aufnahmeschacht bezeichnet werden kann. Dieser Aufnahmeschacht 16 wird einerseits durch die Unterseite 60 des auch eine Oberseite 61 aufweisenden Schirmblechs 12 und die Oberseite 30 des Kontaktträgers 11 gebildet. Genauer gesagt, wird der Aufnahmeschacht 16 nur durch Teile der Oberseite 30 gebildet, nämlich im Bereich der Auflagefläche 100 für die erste Karte 1.

### Das Schirmblech 12

Fig. 7 zeigt eine perspektivische Draufsicht auf die Unterseite 60 des Schirmblechs 12, während Fig. 1 eine perspektivische Draufsicht auf das Schirmblech 12, angebracht am Kontaktträger 11 zeigt. Das Schirmblech 12 besitzt zwei diametral angeordnete Querseitenwände 62, 63 und eine quer dazu verlaufende Längsseitenwand 64. Das Schirmblech 12 bildet keine entgegensetzt zur Längsseitenwand 64 ausgebildete, in die gleiche Richtung wie die Längsseitenwand 64, d.h. nach unten ragende Längsseitenwand, um so den Einführschlitz 34 zum Aufnahmeschacht 16 für die erste Karte 1 vorzusehen. Vielmehr ist ein mittlerer Bereich 68 einer der Längsseitenwand 64 gegenüberliegenden seitlichen Fläche des Schirmblechs 12, entgegengesetzt zu der Biegerichtung der Querseitenwände 62, 63 und der Längsseitenwand 64 nach oben gebogen, um eine seitliche Schirmabdeckung 70 auch als ein starres Gegenlager 70 wirkend für die zweite Karte 2 zu bilden, wenn sich der Deckel 14 des Smart Card Readers 10 in seiner Schließstellung befindet.

Benachbart zu dem nach oben gebogenen Gegenlager 70 verbleiben ebene Vorsprünge 71 und 72.

Die Querseitenwände 62 und 63 sind unterteilt ausgebildet und weisen Zungen 73 auf, die beim Aufstecken des Schirmblechs auf den Kontaktträger 11 in entsprechende Öffnungen ragen, die in den Schirmblechaufnahmen 35, 36 ausgebildet sind. In den Querseitenwänden 62 und 63 sind benachbart zur Längsseitenwand 64 Rastöffnungen 75 ausgebildet, die mit den Rasthaken 43 zusammenarbeiten. Entsprechende Rastöffnungen 75 sind auch in den benachbarten Teilen der Längsseitenwand 64 ausgebildet.

Im Allgemeinen wird der Smart Card Connector 12 auf eine gedruckte Leiterplatte aufgesetzt und zwar mit seiner Unterkante 77. Die Unterkante 77 ist durch mehrere Ausschnitte 78 unterbrochen, aus denen Lötdämpfe austreten können.

Ferner sind in dem Abschirmblech 12 vorzugsweise im Bereich der Anschlussenden der Kontaktelemente 23 Prüflöcher 79 vorgesehen, um die Kontaktelemente 23 prüfen zu können. Benachbart zur Längsseitenwand 64 ist im ebenen Teil des Schirmblechs 12 ein Ausschnitt 801 vorgesehen. Der Ausschnitt 801 gestattet es, dass im zusammengebauten Zustand des Smart Card Readers 10 - vgl. Fig. 1 - die Auflagefläche 300 sich auf ein höheres Niveau erstrecken kann und auch der Zugang zu noch näher zu beschreibenden Erdungskontaktelementen 4, 5 möglich wird.

Von dem Ausschnitt 801 aus verläuft - vgl. dazu wieder Fig. 7 - ein bogenförmiger Führungsschlitz 82, in dem eine Kartenauswerfanordnung 90 geführt ist. Die Kartenauswerfanordnung 90 dient zum Herausschieben der ersten Karte 1 aus der Lesestellung, die bei vollständig in den Kartenschacht 16 eingesetzter erster Karte 1 gegeben ist, wo die Karte 1 an der Anlagefläche 130 anliegt. Die Kartenauswerfanordnung 90 weist einen Hebelarm 92 auf, der an einem Drehlager 91 an der Unterseite des Schirmblechs 12 drehbar gelagert ist. An dem zum Drehlager 91 entgegengesetzten Ende im Bereich des Schlitzes 82 ist am Hebelarm 92 ein Führungsteil 93 ausgebildet, an dem wiederum ein Griff 94 - vgl. dazu auch Fig. 1 - zusammen mit dem Führungsteil 93 über die Oberseite 61 des Schirmblechs 12 ragend ausgebildet ist. An dem, dem Drehpunkt 91 entgegengesetzten Ende ist am Hebelarm 92 ein gebogener Anlagesteg 96 bzw. Kartenanschlag 96 ausgebildet. In Fig. 7 befindet sich die Kartenauswerfanordnung 90 in einer Position, in der die Kartenauswerfanordnung 90 montiert werden kann. In Fig. 1 befindet sich die Kartenauswerfanordnung 90 in einer Position, wo die Karte 1 an der Anlagefläche 130 anliegen kann. Wenn die Karte 1 ausgeworfen werden soll, so erfasst der Benutzer den Führungsteil 93 am Griff 94 und verschwenkt die Kartenauswerfanordnung 90 dadurch, dass der Anlagesteg 96 mit der hinteren Kante der Karte 1 in Wirkeingriff kommt und so die Karte beim Verschwenken des Hebelarms 92 aus dem Aufnahmeschacht 16 herausgeschoben wird.

Dabei kommt die Nase 98 der am Drehpunkt gelegenen Fläche 97 des Hebelarms 92 mit einem Zapfen 201 des Kontaktträgers 11 in Eingriff. Damit wird die effektive Auflagefläche vergrößert und ein Kippen der Kartenauswerfanordnung 90 verhindert.

Der Drehpunkt 91 wird gebildet von einem ausgestanzten umgebogenen Teil 190 des Schirmblechs 12, der in einem Schlitz 191 im Kontaktträger 11 gehalten wird.

Benachbart zur Mündung des Schlitzes 82 in den Ausschnitt 801 springen Ausrichtnasen 95 beidseitig des Schlitzes 82 in den Ausschnitt 801 hinein. Diese Ausrichtnasen 95 erleichtern die ordnungsgemäße Ausrichtung des Schirmblechs 12 gegenüber dem Kontaktträger 11, der entsprechende in Fig. 5 nicht näher bezeichnete, aber dort gezeigte Ausnehmungen bildet.

Gegenüber den Ausrichtnasen 95 verlaufen Teile eines Scharniers 150, und zwar Lagermittel eines Stabs 53 und Halterungen 54 aufweisend, für den schwenkbar anzubringenden Deckel 14. Nachdem das Schirmblech 12 vorzugsweise aus Blech gestanzt und gebogen wird, können die schirmseitigen Lagermittel durch Herumrollen des Blechs um den Stab 53 gebildet werden. Das Schirmblech 12 weist ferner Schirmkontakte 80 diametral entgegensetzt, benachbart zu den Querseiten des Schirmblechs 12, aber senkrecht dazu verlaufend, und über die Oberseite 61 des Schirmblechs 12 herausgedrückt verlaufend, auf. Das Schirmblech 12 besitzt ferner eine gefederte Deckelrastverriegelung 83 und diametral gegenüber dieser eine starre Deckelrastverriegelung 84.

Gemäß dem bevorzugten Ausführungsbeispiel der Erfindung bildet das Schirmblech 12 ein erstes Abschirmelement, welches mit einem zweiten Abschirmelement in der Form eines ebenfalls vorzugsweise aus Metall bestehenden Deckels, eben einem Metalldeckel, zusammenarbeitet. Es ist möglich, das erste Abschirmelement und/oder das zweite Abschirmelement in einer anderen, eine Abschirmung vorsehenden Weise, auszubilden. Beispielsweise kann das erste Abschirmelement und/oder das zweite Abschirmelement aus metallisiertem Kunststoff oder aber auch aus metallbeschichtetem Kunststoff hergestellt sein.

### Der Deckel 14

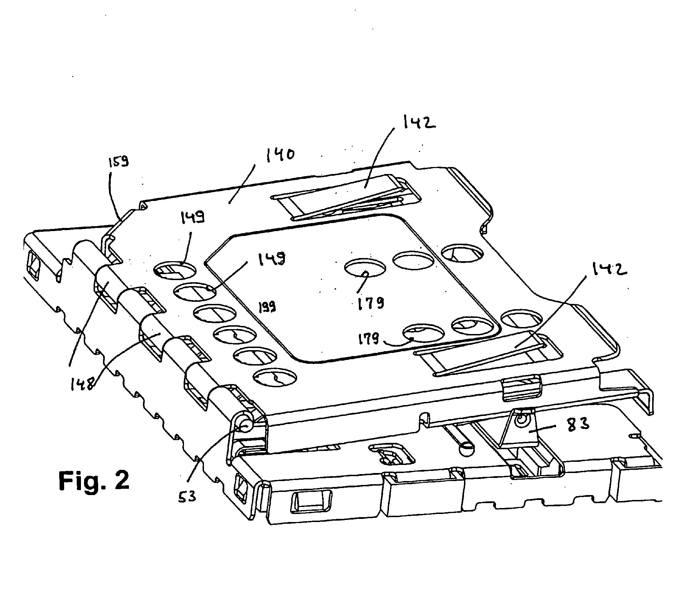

In den Figuren 1 und 2 erkennt man, dass der Deckel 14 eine Ober- bzw. Au-βenseite 140 und eine Unter- bzw. Innenseite 141 besitzt. Aus dem Deckel 14 sind zwei Andruckfedern 142 herausgestanzt, und über die Oberseite 140 hinaus nach oben gebogen. Diese Andruckfedern 142 dienen zur Vermeidung von Kontaktstörungen bei mechanischer Belastung bzw. Stoß, und stützen sich gegenüber darüber angeordneten Teilen (z.B. einem Akku) ab.

Von der Unterseite 141 des Deckels 41 ragen beidseitig Seitenwände 143 weg und bilden bzw. begrenzen den Aufnahmebereich 17 für die zweite Karte 2. Zusätzlich zur Bildung von Kartenführungen für die Karte 2 bilden die Seitenwände 143 jeweils benachbart zum Scharnier 150 einen einfachen Stegteil 144 und daran anschließend zum freien Ende des Deckels 14 hinragend, einen U-förmigen Teil 145. D.h. der Deckel 14 ist in diesem Bereich nach innen parallel zur Unterseite 141 des Deckels 14 umgebogen um zusätzlich zu den in einer Aussparung 161 gelegenen Erdkontaktfedern 888 folgende Teile zu bilden: An den beiden Enden der U-förmigen Teile 145, d.h. am freien Ende des Deckels 14, sind Kartensicherungen 244 für die erste Karte 1 ausgebildet. Diese Kartensicherungen 244 haben im dargestellten Ausführungsbeispiel die Form eines Hakens. Diese Haken übergreifen die eingesetzte erste Karte 1 und halten diese, wie in Fig. 3 gezeigt, in ihrer Lesestellung. In dieser in Fig. 3 gezeigten Schließstellung des Smart Card Connectors 10 ist der Deckel 14 durch die Rastverriegelungen 83, 84 verriegelt.

Auf der Unterseite 141 des Deckels 14 ist dem freien Ende des Deckels 14 gegenüberliegend an einer Seite eine Anlageschräge 159 ausgebildet (Fig. 2).

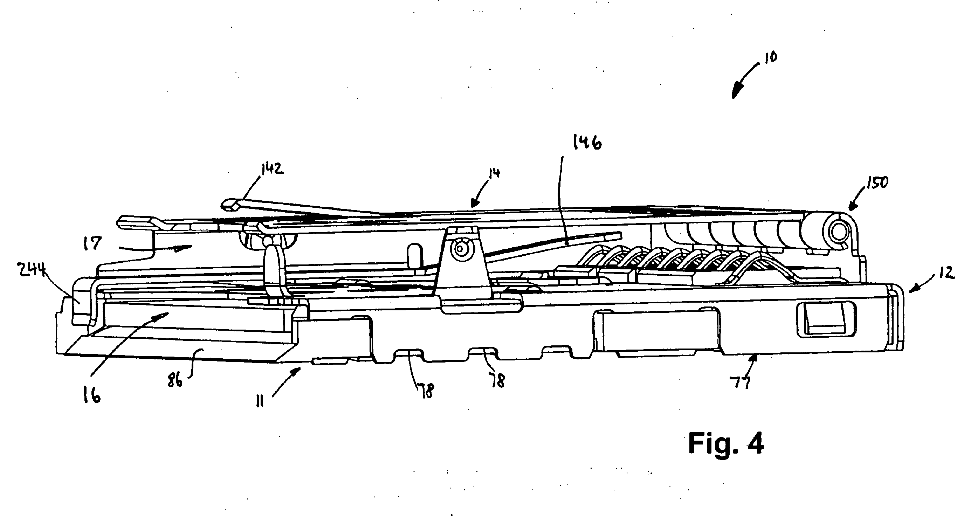

Am der Kartensicherung 244 entgegensetzt liegenden Ende des U-Teils 145 ist ein flexibler Deckelschirmkontakt 146 bzw. 147 ausgebildet. Die Deckelschirmkontakte 146, 147 ragen in den Bereich der Stegteile 144 hinein und sind in Richtung der Unterseite 141 des Deckels gebogen, wie in Fig. 4 zu sehen ist. Dies dient einerseits dazu, die eingeschobene zweite Karte 2 bei geöffnetem Deckel gegen Herausfallen zu sichern und andererseits ohne eingelegte zweite Karte 2 bei geschlossenem Deckel keinen Druck auf die erwähnten Erdungskontaktelemente 4 und 5 auszuüben.

Die Deckelschirmkontakte 146, 147 arbeiten mit den bislang nur kurz erwähnten Erdungskontaktelementen 4 und 5, angeordnet im Kontaktträger 11, zusammen. Wenn der Deckel 14 sich mit eingelegter Karte 2 in seiner Schließstellung befindet, steht Kontakt 146 mit Kontaktelement 5 und Kontakt 147 mit Kontaktelement 4 in Verbindung um eine sichere Erdverbindung herzustellen. Der Kontakt 147 ist leicht nach innen gebogen bzw. geformt, um das Kontaktelement 4 zu erreichen, das wie in Fig. 5 gezeigt ist, etwas weiter als das Kontaktelement 5 von der zugehörigen Querseitenfläche 40 bzw. weiter von dem entsprechenden Stegteil 144 entfernt ist. Wenn der Deckel 14 sich ohne eingelegte Karte 2 in seiner Schließstellung (geschlossene Stellung) befindet, berühren die Kontakte 146 und 147 die Kontaktstellen der Kontaktelemente 4 und 5 nicht oder nur leicht.

Der Deckel 14 weist auf der Oberseite 140 ein geprägtes Logo 199 auf, welches den Typ und die Lage der zweiten Karte 2 darstellt.

### Zusammenbau

Der beispielsweise in den Figuren 1 und 2 gezeigte Smart Card Connectors 10 wird aus dem Kontaktträger 11, dem Schirmblech 12 und dem Blechdeckel 14 zusammengebaut. Vor dem Zusammenbau mit dem Kontaktträger 11 werden zunächst die beiden vorzugsweise aus Metallblech bestehenden Teile, nämlich im bevorzugten Ausführungsbeispiel das Schirmblech 12 und der Metalldeckel 14 schwenkbar verbunden. Zu diesem Zweck werden in bekannter Weise zur Bildung des Scharniers 150 an der Hinterkante des Deckels 14 ausgebildete Anlenklappen 148 - vgl. dazu Fig. 2 - um den Stab 53 herumgebogen. Sodann wird die aus Deckel 14 und Abschirmelement 12 gebildete Einheit auf die Oberseite 30 des Kontaktträgers 11 gesetzt. Das Schirmblech 12 kann vorzugsweise an bestimmten Stellen des Kontaktträgers 11 angeklebt sein. Dadurch sollen zusätzliche Spannungen, die bei mechanischer Verriegelung oder formschlüssigem Zusammenfügen der Teile entstehen, vermieden werden. Durch die Klebeverbindung wird das Schirmblech 12 schwimmend auf dem Kontaktträger 11 gehalten. Vorzugsweise erfolgt das Ankleben, d.h. die Aufbringung von Klebemittel, zwischen den Querseitenflächen 40, 41, möglicherweise auch der Längsseitenfläche 42 und den entsprechenden Querseitenflächen 74, ggf. auch der Längsseitenfläche 76, wozu auf Fig. 7 hingewiesen sei. Beim Aufsetzen des Schirmblechs 12 auf den Kontaktträger 11 treten die Zungen 73 in die entsprechenden Schirmblechaufnahmen 35, 36 ein, und bewirken so eine Halterung und Ausrichtung zwischen Kontaktträger 11 und Schirmblech 12.

### Arbeitsweise

Nach dem Zusammenbau des Kontaktträgers 11, des Schirmblechs 12 und des Metalldeckels 14 ist der Smart Card Connector einsatzbereit. Typischerweise wird der Smart Card Connector 10 in irgendein elektronisches Gerät und zwar dort auf eine Schaltungsplatte (nicht gezeigt) aufgelötet. Dies geschieht mittels eines üblichen Lötverfahrens, wobei die beispielhaft im Schnitt der Fig. 6 gezeigten Anschlussenden 26, 28 der Kontaktelemente 23, 24 mit den Leiterbahnen der Schaltungsplatte verlötet werden. Die Anschlussenden der Kontaktelemente des ersten und zweiten Kontaktsatzes liegen sämtlich in einer präzisen, koplanaren und zwar der gleichen, Ebene. Auch die nicht näher beschriebenen Anschlussenden der Erdungskontakte 4 und 5, sowie die untere Kante 77 des Schirmblechs 12 liegen in der gleichen Ebene, so dass sich eine präzise zuverlässige Verlötung sämtlicher Kontaktelemente und der Schirmung mit den Leiterbahnen auf der Schaltungsplatte ergibt. Die Koplanarität der in dieser gleichen ebene gelegenen Elemente, ist wenigstens auf 0,1 mm genau. Nach oder auch vor dem Einbau des Smart Card Connectors 10 kann die Kontaktgabe der einzelnen Kontakte durch die Prüflöcher 79, 179 und 149 erfolgen.

Wird beispielsweise die erste Karte 1 als erstes in den in Fig. 1 als gezeigten Smart Card Reader 10 eingesetzt, d.h. die Karte 1 wird in den ersten Aufnahmebereich 16, der auch als erster Aufnahmeschacht 16 bezeichnet werden kann, eingeschoben. Beim Einschieben werden die vorzugsweise vorgespannten Kontaktelemente 23 mit ihren Kontaktenden 25 durch die Karte 1 etwas nach unten gedrückt. Wenn dann die Karte 1 mit ihrer Hinterkante an der Anlagefläche 130 (vgl. Fig. 6) zur Anlage kommt, sind die Kontaktzonen oder Kontaktflächen, kurz die Kartenkontakte, der Karte 1 mit den Kontaktenden 25 der Kontaktelemente 23 ausgerichtet und in Kontakt. Bei der Einschubbewegung der Karte 1 in den Kartenschacht 16, wird das Führungsteil 93 der Kartenauswerfanordnung 90 mitgenommen und in die in Fig. 1 gezeigte Position verschoben. Eine am Kontaktträger 11 ausgeformte Schrägfläche 86 erleichtert das Einsetzen der Karte 1 und führt zu dem vom Schirmblech 12 und Kontaktträger 11 gebildeten Einführschlitz 34 hin. Die Karte 1 befindet sich somit in ihrer Lese- oder Kontaktstellung und wird in dieser Position durch die Abmessungen des die Karte 1 aufnehmenden Kartenschachtes sowie die von den Kontaktelementen 23 ausgeübten Kräfte gehalten. Eine Verriegelung der Karte 1 in ihrer Leseposition erfolgt dann schließlich noch durch den geschlossenen Deckel 14, wenn die Kartensicherungen 244 in Form von Haken den Einführschlitz 34 überdecken und die Karte 1 in ihrer Lesestellung sicheren.

Die zweite Karte wird in den zweiten Aufnahmebereich 17, gebildet durch den Deckel 14, eingeschoben bis sie auf einen Anschlag, gebildet durch das Scharnier 150, auftrifft. Beim Einschieben der Karte 2 in den zweiten Aufnahmebereich 17, werden die Deckelschirmkontakte 146, 147 aus der in Fig. 4 gezeigten Position entgegen der Federkraft der Deckelschirmkontakte 146, 147 herausbewegt. Dadurch wird zum einen die Karte 2 im zweiten Aufnahmebereich 17 gehalten, und ferner werden die Deckelschirmkontakte 146, 147 so verschwenkt, dass sie bei geschlossenem Deckel 14 die zugehörigen Erdungskontakte 4, 5 kontaktieren können. Die Karte 2 wird bei geschlossenem Deckel 14 durch das Gegenlager 70 im Aufnahmebereich 17 gehalten.

## Patentansprüche

1. Smart Card Connector (10) für die gleichzeitige Aufnahme zweier Smart Karten, insbesondere einer SIM-Karte (1) und einer MMC-Karte (2), mit einem, eine Oberseite (30) und eine Unterseite (31) aufweisenden Kontaktträger (11), in dem ein erster Satz von Kontaktelementen (21) für die Kontaktierung der Kontaktzone einer ersten Karte (1) und ein zweiter Satz von Kontaktelementen (22) für die Kontaktierung der Kontaktzone einer zweiten Karte (2) vorgesehen sind, mit einem ersten Kartenaufnahmebereich (16) für die erste Karte (1) auf der Oberseite (30) des Kontaktträgers, und mit einem schwenkbar bezüglich des Kontaktträgers (11) angebrachten, eine Innen- (141) und Außenseite (140) aufweisenden Deckel (14), der einen zweiten Kartenaufnahmebereich (17) für die zweite Karte (2) auf der Innenseite (141) des Deckels (14) vorsieht,
**dadurch gekennzeichnet, dass** der Smart Card Connector zusätzlich zum Deckel (14), der den Smart Card Connector (10) insgesamt abschirmt, eine weitere Schirmeinrichtung (12) die die beiden Kartenaufnahmebereiche (16, 17) untereinander bzw. gegeneinander abschirmt, und eine Kartenauswerfanordnung (90) zum Ausschieben der ersten Karte (1) umfasst.

2. Smart Card Connector (10) nach Anspruch 1, wobei die Schirmeinrichtung den Deckel (14) ausgebildet aus einem leitfähigen Material und ein Abschirmelement (12) ebenfalls ausgebildet aus einem leitfähigen Material umfasst, welches den ersten Kartenaufnahmebereich (16) vom zweiten Kartenaufnahmebereich (17) trennt und abschirmt.

3. Smart Card Connector (10) nach Anspruch 2, wobei das Abschirmelement (12) die Oberseite (30) des Kontaktträgers (11) überdeckt und am Kontaktträger (11) befestigt ist.

4. Smart Card Connector (10) nach Anspruch 2 oder 3, wobei das Abschirmelement (12) Seitenwände (62, 63, 64) besitzt, die die Seitenflächen (40, 41, 42) des Kontaktträgers (11) umfassen.

5. Smart Card Connector (10) nach Anspruch 2, 3 oder 4, wobei das Abschirmelement (12) Befestigungsmittel (62, 63, 75) hat, die mit Gegenbefestigungsmitteln (35, 36, 43) des Kontaktträgers (11) zusammenwirken.

6. Smart Card Connector (10) nach Anspruch 2, 3, 4 oder 5, wobei das Abschirmelement (12) ein Schirmblech (12), insbesondere eine Metallplatte ist.

7. Smart Card Connector (10) nach einem der vorhergehenden Ansprüche, wobei der Deckel (14) schwenkbar an dem Abschirmelement (12) angebracht ist.

8. Smart Card Connector (10) nach Anspruch 1, wobei der erste Satz (12) von jeweils Anschlussenden (26) und Kontaktenden bzw. Kontaktstellen (25) aufweisenden Kontaktelementen seine Kontaktenden (25) über einer ersten Ebene (100) und der zweite Satz (22) von jeweils Anschlussenden (28) und Kontaktenden bzw. Kontaktstellen (27) aufweisenden Kontaktelementen seine Kontaktenden (27) über einer dritten Ebene angeordnet hat und zwar so, dass die Anschlussenden (26, 28) sowohl des ersten (21), als auch des zweiten Satzes (22) von Kontaktelementen auf der Unterseite (31) des Kontaktträgers (11) angeordnet sind.

9. Smart Card Connector (10) nach Anspruch 1, wobei die zwei Smart Karten (1, 2) unterschiedliche Karten sind.

10. Smart Card Connector (10) nach Anspruch 9, wobei die erste Karte (1) eine SIM-Karte und die zweite Karte (2) eine MMC-Karte ist.

11. Smart Card Connector (10) nach einem der vorhergehenden Ansprüche, wobei der Deckel (14) eine Schräge (159) zur Lagensicherung der zweiten Karte (2) im Kartenaufnahmebereich (17) aufweist.

12. Smart Card Connector (10) nach einem der vorhergehenden Ansprüche, wobei der Kontaktträger (11) eine Schräge (129) zur Lagensicherung der ersten Karte (1) im Kartenaufnahmebereich (16) aufweist.

13. Smart Card Connector (10) nach einem der vorhergehenden Ansprüche, wobei der zwischen einer Öffnungsposition und einer Schließposition verschwenkbare Deckel (14) nach dem Schließen mittels Kartensicherungen (244) und einem Gegenlager (70) beide Karten verriegelt.

14. Smart Card Connector (10) nach einem der vorhergehenden Ansprüche, wobei das Abschirmelement (12) einen hochgezogenen Teil einer Längswand (64) besitzt, der einen Teil (54) des Deckelscharniers (150) bildet.

15. Smart Card Connector (10) nach einem der vorhergehenden Ansprüche, wobei das leitfähige Material Metall ist.

16. Smart Card Connector (10) nach einem der vorhergehenden Ansprüche, wobei der Kontaktträger (11) Aussparungen (29) zur Bauelementeaufnahme aufweist.

17. Smart Card Connector (10) nach einem der vorhergehenden Ansprüche, wobei das Abschirmelement (12) mindestens eine Rastverriegelung (83, 84) für den Deckel (14) aufweist.

18. Smart Card Connector (10) nach Anspruch 17, wobei eine erste Rastverriegelung (83) gefedert und eine zweite Rastverriegelung (84) starr in Richtung des ersten Kartenaufnahmebereichs (16) ist.

19. Smart Card Connector (10) nach einem der vorhergehenden Ansprüche, wobei der Deckel (14) mindestens eine Andruckfeder (142) aufweist.

20. Smart Card Connector (10) nach einem der vorhergehenden Ansprüche, wobei der Deckel (14) ein geprägtes Logo (199) aufweist.

21. Smart Card Connector (10) nach einem der vorhergehenden Ansprüche, wobei das Abschirmelement (12) und der Deckel (14) Prüföffnungen (79, 149, 179) aufweisen.

22. Smart Card Connector (10) nach einem der vorhergehenden Ansprüche, wobei benachbart zum zweiten Satz (22) von Kontaktelementen mindestens ein Zusatzkontakt (4, 5) zum Kontaktieren des Deckels (14) im Kontaktträger (11) untergebracht ist.

23. Smart Card Connector (10) nach einem der vorhergehenden Ansprüche, wobei der Deckel (14) mindestens einen ersten Schirmkontakt (888) zum Kontaktieren eines Abschirmelement-Schirmkontakts (80) aufweist.

24. Smart Card Connector (10) nach Anspruch 23,
wobei der Deckel (14) mindestens einen zweiten Schirmkontakt (146, 147) zum Kontaktieren der Zusatzkontakte (4, 5) aufweist.

25. Smart Card Connector (10) nach Ansprunch 24 wobei die zweiten Schirmkontakte (146, 147) im geschlossenen Zustand des Deckels ohne eingelegte Karte (2) die Zusatzkontakte (4, 5) nicht oder nur leicht berühren und im geschlossenen Zustand des Deckels mit eingelegter Karte (2) die Zusatzkontakte (4, 5) kontaktieren.

26. Smart Card Connector (10) nach einem der vorhergehenden Ansprüche, wobei das Abschirmelement (12) und das Deckelscharnier (150) einstückig ausgeformt ist.

27. Smart Card Connector (10) nach einem der vorhergehenden Ansprüche, wobei das Abschirmelement (12) den Kontaktträger (11) seitlich umschließt.

28. Smart Card Connector (10) nach einem der vorhergehenden Ansprüche, wobei eine untere Kante (77) des Abschirmelements (12) Ausschnitte (78) aufweist.

29. Smart Card Connector (10) nach einem der vorhergehenden Ansprüche, wobei der Kontaktträger (11) mindestens eine Aufnahme (35, 36) für das Abschirmelement (12) aufweist.

30. Smart Card Connector (10) nach Anspruch 29
wobei die Aufnahme (35, 36) für das Abschirmelement (12) am Kontaktträger (11) angeordnet ist.

31. Smart Card Connector (10) nach einem der vorhergehenden Ansprüche, wobei beide Karten (1, 2) von einer senkrecht zu einer Schwenkachse (53) des Deckels (14) stehenden und der Schwenkachse (53) gegenüberliegenden Seite eingeführt werden.

32. Smart Card Connector (10) nach einem der vorhergehenden Ansprüche, wobei der erste Kartenaufnahmebereich (16) als Aufnahmeschacht ausgebildet ist und zwar abgegrenzt durch die Unterseite (60) des Abschirmelements (12), die Oberseite (30) des Kontaktträgers (11), von dem Kontaktträger (11) gebildeten Seitenführungen (104) und einen von dem Kontaktträger (11) gebildeten rückseitigen Anschlag (130).

33. Smart Card Connector (10) nach einem der vorhergehenden Ansprüche, wobei der zweite Kartenaufnahmebereich (17) als Kartenaufnahmeraum definiert ist durch die Innenseite (11) des Deckels (14), von dem Deckel (14) gebildete U-förmige seitliche Führungsbahnen (145) und einen von dem Deckelscharnier (150) gebildeten rückseitigen Anschlag.

34. Smart Card Connector (10) nach einem der vorhergehenden Ansprüche, wobei auf der Unterseite (31) des Kontaktträgers (11) alle Anschlussenden (26, 28) und eine untere Kante (77) des Abschirmelements (12) in einer Ebene liegen, so dass die Koplanarität der durch das untere Ende dieser Elemente vorgegebenen Fläche besser als 0,1 mm ist.

35. Smart Card Connector (10) nach einem der vorhergehenden Anspruche, wobei die Oberseite (30) des Kontaktträgers (11) einen als eine Auflagefläche für die erste Karte dienenden ersten ebenen Bereich (100) bildet, der den ersten Satz (16) von Kontaktelementen umgibt und wobei die Oberseite (30) einen zweiten ebenen Bereich (200), der den ersten Bereich (100) umgibt und weiter als der erste Bereich (100) von der Unterseite (31) des Kontaktträgers entfernt ist aufweist und die Kontur des Kartenaufnahmebereichs (16) vorgibt.

36. Smart Card Connector (10) nach Anspruch 35
wobei die Oberseite (30) des Kontaktträgers (11) einen dritten ebenen Bereich (300) bildet, der den zweiten Satz (17) von Kontaktelementen umgibt.

37. Smart Card Connector (10) nach einem der vorhergehenden Ansprüche, wobei das Abschirmelement (12) an der dem Deckelscharnier (150) gegenüberliegenden Seite eine in Richtung des Deckels (14) hochgebogene seitliche Schirmabdeckung (70) aufweist, insbesondere auch als Gegenlager (70) und Haltesicherung für die zweite Karte (2).

38. Smart Card Connector (10) nach einem oder mehreren der vorhergehenden Ansprüche, wobei die Kartenauswerfanordnung (90) einen Hebelarm (92) aufweist, der an einem Drehlager (91) an einer Unterseite (60) eines Schirmblechs (12) drehbar gelagert ist und an einem dem Drehlager (91) am entgegengesetzten Ende ein Führungsteil (93) ausbildet, das entlang eines Schlitzes (82) im Schirmblech (12) geführt wird.

39. Smart Card Connector (10) nach Anspruch 38, wobei das Führungsteil (93) einen Griff (94) und einen Kartenanschlag (96) aufweist.

## Claims

1. A smart connector (10) adapted to simultaneously receive two smart cards in particular a SIM-card (1) and a MMC- Card (2), said smart card connector (10) comprising
a contact support (11) having an upper surface (30) and a bottom surface (31) and comprising a first set of contact elements (21) for contacting the contact zone of a first card (1), and a second set of contact elements (22) for the contacting of the contact zone of a second card (2);
a first contact receiving area (16) for the first card (1) at the upper side (30) of the contact support, and
a cover (14) pivotally supported with respect to the contact support (11) and, comprising an inner surface (141) and an outer surface (140), said cover (14) providing at its inner surface (141) a second card receiving area (17) for the second card (2), **characterized in that**
the smart card connector (10) provides in addition to the cover (14) which shields the smart card connector (10) in its totality, a further shielding means (12) which shields the both card receiving areas (16, 17) with respect to each other and further comprising a card ejecting device (90) for ejecting the first card (1).

2. A smart card connector (10) as set forth in claim 1, wherein the shielding means comprises the cover (14) formed of an conductive material and a shielding element (12) also formed of an electrically conductive material separating and shielding the first card receiving area (16) from the second card receiving area (17).

3. The smart card connector (10) as set forth in claim 2, wherein the shielding element (12) covers the upper surface (30) of the contact support (11) and is fixedly mounted to the contact support (11).

4. The smart card connector (10) as set forth in claim 2 or 3, wherein shielding element (12) comprises sidewalls (62, 63, 64) which surround the side surfaces (40, 41, 42) of the contact support (11).

5. The smart card connector (10) as set forth in claim 2, 3 or 4, wherein the shielding element (12) comprises mounting means (62, 63, 75) which cooperate with opposite mounting means (35, 36, 43) of the contact support (11).

6. The smart card connector (10) of claims 2, 3, 4 or 5, wherein the shielding element (12) is a shielding plate, in particular a metal plate.

7. The smart card connector (10) of one of the preceding claims, wherein the cover (14) is pivotally mounted at the shielding element (12).

8. The smart card connector (10) as set forth in claim 1, wherein the first set (12) of contact elements having termination ends (26) and contact ends (25) is designed such that its contact ends (25) project above a first plane (100), and
wherein the second set (22) of contact elements, having termination ends (28) and contact ends (27), is designed such that its contact ends (27) extend beyond a third plane, while the termination ends (26, 28) of both the first set (21) as well as the second set (22) of contact elements are provided at the bottom side (31) of the contact support (11).

9. The smart card connector (10) as set forth in claim 1, wherein the two smart cards (1, 2) are cards of a different type.

10. The smart card connector (10) as set forth in claim 9, wherein the first card (1) is a SIM card and wherein the second card (2) is an MMC card.

11. The smart card connector (10) as set forth in as set fort in one of the preceding claims, wherein the cover (14) comprises an inclined surface (159) for securing the position of the second card (2) in the card receiving area (17).

12. The smart card connector (10) as set as set fort in one of the preceding claims, wherein the contact support (11) comprises an inclined surface (129) for providing security for the position of the first card (1) in the card receiving area (16).

13. The smart card connector (10) as set forth in one of the preceding claims, wherein the pivotal cover (14) is adapted to be pivoted between an opening position and a closed position, and wherein the cover locks both cards by means of card securing means (24) and an abutment (70).

14. The smart card connector (10) as set forth in one of the preceding claims, wherein the shielding element (12) comprises in a longitudinal wall (64) and an upwardly extending portion which forms a part (54) of the cover hinge (150).

15. The smart card connector (10) as set forth in one or more of the preceding claims, wherein the conductive material is metal.

16. The smart card connector (10) as set forth in one or more of the preceding claims, wherein the contact support (11) comprises openings (29) for receiving components.

17. The smart card connector (10) as set forth in one or more of the preceding claims, wherein the shielding element (12) comprises at least one locking means (83, 84) for the cover (14).

18. The smart card connector (10) as set forth in claim 17, wherein first detent locking means (83) is resilient, while a second locking means (84) is rigid in the direction of the first card receiving area (16).

19. The smart card connector (10) as set forth in one or more of the preceding claims, wherein the cover (14) comprises at least one pressure spring (142).

20. The smart card connector (10) as set forth in one or more of the preceding claims, wherein the cover (14) comprises a logo (199) pressed into said cover (14).

21. The smart card connector (10) as set forth in one or more of the preceding claims, wherein the shielding element (12) and the cover (14) comprise checking openings (79, 149, 179).

22. The smart card connector (10) as set forth in one or more of the preceding claims, wherein adjacent to the second set (22) of contact elements at least one additional contact (4, 5) is provided for contacting the cover (14), said additional contact (4, 5) being located in the contact support (11).

23. The smart card connector (10) as set forth in one or more of the preceding claims, wherein the cover (14) comprises at least one first shielding contact (888) for contacting a shielding contact (80) of the shielding element.

24. The smart card connector (10) as set forth in claim 23, wherein said cover (14) comprises at least a second shielding contact (146; 147) for contacting the additional contacts (4, 5).

25. The smart card connector (10) as set forth in claim 24, wherein in the closed condition of the cover without card (2) being inserted, the second shielding contacts (146, 147) do not contact the additional contacts (4, 5) or contact said additional contacts (4, 5) only slightly, while in the closed condition of the cover with inserted card (2), the additional contacts (4, 5) do provide a contact.

26. The smart card connector (10) as set forth in one of the preceding claims, wherein the shielding element (12) and the hinge (150) of the cover are integrally formed.

27. The smart card connector (10) as set forth in one of the preceding claims, wherein the5 second shielding element (12) is adapted to laterally embrace the contact support (11).

28. The smart card connector (10) as set forth in one of the preceding claims, wherein a bottom edge (77) of the shielding element (12) comprises recesses (78).

29. The smart card connector (10) as set forth in one of the preceding claims, wherein the contact support comprises at least one receiving means (35, 36) for the shielding element (12).

30. The smart card connector (10) as set forth in claim 29, wherein the receiving means (35, 36) for the shielding element (12) are provided at the contact support (11).

31. The smart card connector (10) as set forth in one of the preceding claims, wherein both cards (1, 2) are inserted into the smart card connector from a side perpendicular to a pivot axis (53) of the cover (14) and located opposite to the pivot axis (53) of the cover.

32. The smart card connector (10) as set forth in one of the preceding claims, wherein the first card receiving area (16) is defined as a receiving space which is bordered by the bottom side (60) of the shielding element (12), the upper surface (30) of the contact support (11) and by lateral guides (104)
formed by the contact support (11) and further by a backwardly located abutment (130) formed by the contact support (11).

33. The smart card connector (10) as set forth in one of the preceding claims, wherein the second card receiving space (17) is defined as a card receiving space by the inner surface (11) of the cover (14) by U-shaped lateral guides (145) formed by the cover and by a backwardly located abutment formed by the hinge (150) of the cover.

34. The smart card connector (10) as set forth in one of the preceding claims, wherein at the bottom side (31) of the contact support (11) all termination ends (26, 28) and a bottom edge (77) of the shielding element (12) are located in one plane for co-planarity, so that the co-planarity of the predetermined area defined by the bottom and of said elements is better than 0,1 mm.

35. The smart card connector (10) as set forth in one of the preceding claims, wherein the upper surface (30) of the contact support (11) forms a first planar area (100) serving as an abutment or supporting surface for the first card, said first planar area surrounding the first set (16) of contact elements, and wherein
further the upper surface (30) defines a second planar area (200) which surrounds the first area (100), said second planar area (200) being located at a greater distance than the first area (100) from the bottom side (35) of the contact support, defining the contour of the card receiving area (16).

36. The smart card connector (10) as set forth in claim 35, wherein the upper surface (30) of the contact support (11) defines a third planar area (300) which surrounds the second set (17) of contact elements.

37. The smart card connector (10) as set forth in one or more of the preceding claims, wherein said shielding element (12) is provided opposite to the hinge (150) of the cover and is bent upwardly in direction towards the cover (14) forming a lateral shielding cover (70) which serves in particular as an abutment (70) and provides a position security for the second card (2).

38. The smart card connector (10) as set forth in one or more of the preceding claims, wherein the card ejecting means (90) comprises a lever arm (92) which is rotatably mounted at a pivot bearing (91) at the bottom side (60) of the shielding metal plate (12),wherein a guide member (93) is provided at an end opposite to the pivot bearing (91), said guide member (93) being guided along a slot (82) in the shielding metal plate (12).

39. The smart card connector (10) as set forth in claim 38, wherein the guide member (93) is provided with a handle (94) and a card abutment means (96).

## Revendications

1. Connecteur de carte à puce (10) adapté à recevoir simultanément deux cartes à puce, en particulier une carte SIM (1) et une carte MMC (2), le connecteur de carte à puce (10) comprenant :
un support de contacts (11) ayant une face supérieure (30) et une face inférieure (31) et comprenant un premier ensemble d'éléments de contact (21) pour contacter la zone de contact d'une première carte (1) et un second ensemble d'éléments de contact (22) pour contacter la zone de contact d'une seconde carte (2) ;
une première zone de réception de contacts (16) pour la première carte (1) au niveau du côté supérieur (30) du support de contacts ; et
un couvercle (14) porté à pivotement par rapport au support de contacts (11) et comprenant une face interne (141) et une face externe (140), le couvercle (14) comportant au niveau de sa face interne (141) une seconde zone de réception de carte (17) pour la seconde carte (2), **caractérisé en ce que** :
le connecteur de carte à puce (10) comporte en plus du couvercle (14) qui fait écran au connecteur de carte à puce (10) en totalité, un autre moyen faisant écran (12) qui fait écran aux deux zones de réception de carte (16, 17) l'une par rapport à l'autre et comprend en outre un dispositif d'éjection de carte (90) pour éjecter la première carte (1).

2. Connecteur de carte à puce (10) selon la revendication 1, dans lequel le moyen faisant écran comprend le couvercle (14) constitué d'un matériau conducteur et un élément (12) faisant écran également constitué d'un matériau électriquement conducteur séparant la première zone de réception de carte (16) de la seconde zone de réception de carte (17) et faisant écran entre elles.

3. Connecteur de carte à puce (10) selon la revendication 2, dans lequel l'élément (12) faisant écran recouvre la face supérieure (30) du support de contacts (11) et est monté de façon fixe sur le support de contacts (11).

4. Connecteur de carte à puce (10) selon la revendication 2 ou 3, dans lequel l'élément (12) faisant écran comprend des parois latérales (62, 63, 64) qui entourent les faces latérales (40, 41, 42) du support de contacts (11).

5. Connecteur de carte à puce (10) selon la revendication 2, 3 ou 4, dans lequel l'élément (12) faisant écran comprend des moyens de montage (62, 63, 75) qui coopèrent avec des moyens de montage opposés (35, 36, 43) du support de contacts (11).

6. Connecteur de carte à puce (10) selon la revendication 2, 3, 4 ou 5, dans lequel l'élément (12) faisant écran est une plaque faisant écran, notamment une plaque métallique.

7. Connecteur de carte à puce (10) selon l'une quelconque des revendications précédentes, dans lequel le couvercle (14) est monté à pivotement sur l'élément (12) faisant écran.

8. Connecteur de carte à puce (10) selon la revendication 1, dans lequel :
le premier ensemble (12) d'éléments de contact ayant des extrémités de terminaison (26) et des extrémités de contact (25) est conçu de sorte que les extrémités de contact (25) font saillie au-dessus d'un premier plan (100) ; et
le second ensemble (22) d'éléments de contact ayant des extrémités de terminaison (28) et des extrémités de contact (27) est conçu de sorte que les extrémités de contact (27) s'étendent au-delà d'un troisième plan, alors que les extrémités de terminaison (26, 28) du premier ensemble (21) et du second ensemble (22) d'éléments de contact sont prévues du côté inférieur (31) du support de contacts (11).

9. Connecteur de carte à puce (10) selon la revendication 1, dans lequel les deux cartes à puce (1, 2) sont des cartes de type différent.

10. Connecteur de carte à puce (10) selon la revendication 9, dans lequel la première carte (1) est une carte SIM et la seconde carte (2) est une carte MMC.

11. Connecteur de carte à puce (10) selon l'une quelconque des revendications précédentes, dans lequel le couvercle (14) comporte une surface inclinée (159) pour sécuriser la position de la seconde carte (2) dans la zone de réception de carte (17).

12. Connecteur de carte à puce (10) selon l'une quelconque des revendications précédentes, dans lequel le support de contacts (11) comporte une surface inclinée (129) pour assurer la sécurité de positionnement de la première carte (1) dans la zone de réception de carte (16).

13. Connecteur de carte à puce (10) selon l'une quelconque des revendications précédentes, dans lequel le couvercle pivotant (14) est adapté à pivoter entre une position ouverte et une position fermée et dans lequel le couvercle verrouille les deux cartes à l'aide des moyens de fixation de carte (24) et d'une butée (70).

14. Connecteur de carte à puce (10) selon l'une quelconque des revendications précédentes, dans lequel l'élément (12) faisant écran comporte une paroi longitudinale (64) et une partie s'étendant vers le haut qui constitue une partie (54) de la charnière (150) du couvercle.

15. Connecteur de carte à puce (10) selon l'une quelconque des revendications précédentes, dans lequel le matériau conducteur est un métal.

16. Connecteur de carte à puce (10) selon l'une quelconque des revendications précédentes, dans lequel le support de contacts (11) comporte des ouvertures (29) pour recevoir des composants.

17. Connecteur de carte à puce (10) selon l'une quelconque des revendications précédentes, dans lequel l'élément (12) faisant écran comprend au moins un moyen de verrouillage (83, 84) pour le couvercle (14).

18. Connecteur de carte à puce (10) selon la revendication 17, dans lequel le premier moyen de verrouillage à cliquer (83) est élastique tandis qu'un second moyen de verrouillage (84) est rigide dans la direction de la première zone de réception de carte (16).

19. Connecteur de carte à puce (10) selon l'une quelconque des revendications précédentes, dans lequel le couvercle (14) comprend au moins un ressort presseur (142).

20. Connecteur de carte à puce (10) selon l'une quelconque des revendications précédentes, dans lequel le couvercle (14) comprend un logo (199) formé par pression dans le couvercle (14).

21. Connecteur de carte à puce (10) selon l'une quelconque des revendications précédentes, dans lequel l'élément (12) faisant écran et le couvercle (14) comprennent des ouvertures de vérification (79, 149, 179).

22. Connecteur de carte à puce (10) selon l'une quelconque des revendications précédentes, dans lequel de façon adjacente au second ensemble (22) d'éléments de contact, il est prévu au moins un contact additionnel (4, 5) pour contacter le couvercle (14), le contact additionnel (4, 5) étant situé dans le support de contacts (11).

23. Connecteur de carte à puce (10) selon l'une quelconque des revendications précédentes, dans lequel le couvercle (14) comprend au moins un premier contact d'écran (888) pour faire contact avec un contact d'écran (80) de l'élément faisant écran.

24. Connecteur de carte à puce (10) selon la revendication 23, dans lequel le couvercle (14) comprend au moins un second contact d'écran (146, 147) pour faire contact avec les contacts additionnels (4, 5).

25. Connecteur de carte à puce (10) selon la revendication 24, dans lequel, à l'état fermé du couvercle sans carte (2) insérée, les seconds contacts d'écran (146, 147) ne contactent pas les contacts additionnels (4, 5) ou contactent les contacts additionnels (4, 5) seulement légèrement, tandis que, en position fermée du couvercle avec une carte insérée (2), les contacts additionnels (4, 5) assurent un contact.

26. Connecteur de carte à puce (10) selon l'une quelconque des revendications précédentes, dans lequel l'élément (12) faisant écran et la charnière (150) du couvercle sont formés d'une seule pièce.

27. Connecteur de carte à puce (10) selon l'une quelconque des revendications précédentes, dans lequel le second élément (12) faisant écran est adapté à entourer latéralement le support de contacts (11).

28. Connecteur de carte à puce (10) selon l'une quelconque des revendications précédentes, dans lequel un bord inférieur (77) de l'élément (12) faisant écran comprend des évidements (78).

29. Connecteur de carte à puce (10) selon l'une quelconque des revendications précédentes, dans lequel le support de contacts comprend au moins un moyen de réception (35, 36) pour l'élément (12) faisant écran.

30. Connecteur de carte à puce (10) selon la revendication 29, dans lequel les moyens de réception (35, 36) pour l'élément (12) faisant écran sont prévus au niveau du support de contacts (11).

31. Connecteur de carte à puce (10) selon l'une quelconque des revendications précédentes, dans lequel deux cartes (1, 2) sont insérées dans le connecteur de carte à puce à partir d'un côté perpendiculaire à un axe de pivotement (53) du couvercle (14) et sont disposées de façon opposée à l'axe de pivotement (53) du couvercle.

32. Connecteur de carte à puce (10) selon l'une quelconque des revendications précédentes, dans lequel la première zone de réception de carte (16) est définie comme un espace de réception qui est porté par le côté inférieur (60) de l'élément (12) faisant écran, par la surface supérieure (30) du support de contacts (11) et par des guides latéraux (104) formés par le support de contacts (11) et en outre par une butée disposée vers l'arrière (130) formée par le support de contacts (11).

33. Connecteur de carte à puce (10) selon l'une quelconque des revendications précédentes, dans lequel le second espace de réception de carte (17) est défini comme un espace de réception de carte par la surface interne (11) du couvercle (14) par des guides latéraux en forme de U (145) formés par le couvercle et par une butée disposée vers l'arrière formée par la charnière (150) du couvercle.

34. Connecteur de carte à puce (10) selon l'une quelconque des revendications précédentes, dans lequel le bord inférieur (31) du support de contacts (11), toutes les terminaisons de contact (26, 28) et un bord inférieur (77) de l'élément (12) faisant écran sont disposés dans un plan de façon coplanaire de façon que la coplanéité de la zone prédéterminée définie par le bord inférieur et lesdits éléments est meilleure que 0,1 mm.

35. Connecteur de carte à puce (10) selon l'une quelconque des revendications précédentes, dans lequel la surface supérieure (30) du support de contacts (11) forme une première zone plane (100) servant de butée ou de surface support pour la première carte, la première zone plane entourant le premier ensemble (16) d'éléments de contact dans lequel la surface supérieure (30) définit une seconde zone plane (200) qui entoure la première zone (100), la seconde zone plane (200) étant disposée à une distance supérieure à celle de la première zone (100) du bord inférieur (35) du support de contacts, définissant le contour de la zone de réception de carte (16).

36. Connecteur de carte à puce (10) selon la revendication 35, dans lequel la surface supérieure (30) du support de contacts (11) définit une troisième zone plane (300) qui entoure le second ensemble (17) d'éléments de contact.

37. Connecteur de carte à puce (10) selon l'une quelconque des revendications précédentes, dans lequel l'élément (12) faisant écran est prévu en face de la charnière (150) du couvercle et est courbé vers le haut dans une direction allant vers le couvercle (14) formant un couvercle d'écran latéral (70) qui sert en particulier de butée (70) et assure une sécurité en position pour la seconde carte (2).

38. Connecteur de carte à puce (10) selon l'une quelconque des revendications précédentes, dans lequel les moyens d'éjection de carte (90) comprennent un bras de levier (92) qui est monté à rotation au niveau d'un palier de pivotement (91) du côté inférieur (60) de la plaque métallique faisant écran (12) tandis qu'un élément de guidage (93) est prévu à une extrémité opposée du palier formant pivot (91), les éléments de guidage (93) étant guidés le long d'une fente (82) dans la plaque métallique faisant écran (12).

39. Connecteur de carte à puce (10) selon la revendication 38, dans lequel l'élément de guidage (93) est muni d'une poignée (94) et d'un moyen de butée de carte (96).
